# FASCICULE DE BREVET EUROPEEN

(11) **EP 2 019 472 B1**
(45) Date de publication et mention de la délivrance du brevet: **16.12.2009**
(21) Numéro de dépôt: 08290633.0
(22) Date de dépôt: 30.06.2008
(51) Int. Cl.: H02K 1/22, H02K 21/04, H02K 1/32, H02K 7/00

(54) **Machine dynamo-électrique tournante à rotor intérieur provoquant sur son stator une double polarisation par aimant permanent et par bobinage**
Dynamo-elektrisch umlaufende Maschine mit Innenrotor, der auf seinem Stator eine doppelte Polarisierung über Permanentmagnet und Wicklung erzeugt
Rotating dynamoelectric machine with interior rotor producing double polarisation on its stator by permanent magnet and by winding

(30) Priorité: 27.07.2007 FR 0705490
(43) Date de publication de la demande: 28.01.2009
(73) Titulaire: KOEHLER, Gérard, F-92410 Ville-d'Avray (FR)
(72) Inventeur: KOEHLER, Gérard, F-92410 Ville-d'Avray (FR)

(56) Documents cités:
- DE-A1- 19 527 324
- DE-C1- 4 139 843
- FR-A- 2 791 483
- JP-A- 60 084 955

## Description

Par le WO 2005/122367 (KOEHLER), on connait des machines dynamo-électriques tournantes à réluctance variable, à pôles saillants séparés par des encoches ouvertes, les phases étant réparties dans des circuits magnétiques séparés.

Les figures 20 et 21 de ce WO représentent le cas d'un alternateur à phases axialement réparties, dans trois stators extérieurs comportant un bobinage à méandres.

Ce stator est excité d'une manière connue par un rotor dont les griffes sont polarisées par un bobinage.

De plus, ces griffes sont ici également polarisées par un aimant permanent de façon à ce que cette double excitation permette d'économiser des ampèretours d'excitation, tout en ayant une grande plage de fonctionnement.

Par ailleurs, avec ces deux excitations, on peut avoir un grand couple de démarrage.

Cependant cette disposition est volumineuse alors qu'on recherche la diminution des masses avec un faible coût.

Le FR-A-2819350 (VALEO) propose d'avoir au rotor un pôle sur deux à bobinage et les autres pôles à aimants permanents. La plage de réglage est donc limitée.

Une autre machine dynamo-électrique selon l'état de la technique est connue du document FR-A-2791483.

Le but de la présente invention est de dévoiler une disposition permettant de réaliser simplement et économiquement une double polarisation rotorique réglable, à faible consommation et avec une masse réduite par rapport à l'état de la technique.

L'invention propose d'éviter le mauvais rendement électromagnétique de la composition vectorielle triphasée.

Le refroidissement des conducteurs des bobinages rotoriques et statoriques peut être amélioré avec une diminution de l'encombrement des têtes de bobinage.

Suivant l'invention, le bobinage rotorique est à pôles conséquents en effectuant des méandres autour des pôles rotoriques, au raz des entrefers de façon à pouvoir bien contrôler le flux dirigé vers le stator.

Le rotor est constitué autour d'un arbre comportant, dans sa surface périphérique extérieure, des rainures à entrée réduite, en nombre égal à celui du nombre de pôles statoriques de la machine.

Un pôle rotorique monophasé à tôles empilées, de forme globalement triangulaire, a une face courbée constituant une surface polaire, à l'opposée de laquelle apparaît une queue-d'aronde susceptible de s'encastrer dans une des rainures de l'arbre.

Un aimant permanent est glissé entre les faces latérales de deux pôles voisins et des tétons du pôle l'empêchent de sortir de l'encoche ainsi formée.

La hauteur radiale d'un aimant permanent laisse, jusqu'à l'entrefer, un espace pour loger les conducteurs rectilignes d'un bobinage à méandres réalisé suivant le FR A-2912010 (KOEHLER), de préférence comme pour le stator qui est alors à phases axialement réparties.

Une cale, engagée près de l'entrefer, maintient le bobinage hors de l'entrefer.

Trois ensembles rotoriques sont ainsi formés le long de l'arbre.

Un seul bobinage rotorique peut aussi polariser les trois circuits magnétiques rotoriques.

Pour avoir un espace réduit des têtes de bobinage rotorique et éventuellement statorique, les conducteurs latéraux d'une couche radiale sortant d'une encoche peuvent être plaqués sur le fer du pôle, en les écartant les uns des autres pour pouvoir loger entre eux un conducteur de la couche suivante.

Les aimants permanents sont dimensionnés pour avoir un fonctionnement avec des faibles fluctuations du courant rotorique dans les conditions normales d'utilisation.

Pendant un démarrage, les conducteurs entourant un pôle rotorique augmentent le flux sortant de ce pôle. A l'opposé, à grande vitesse de rotation, un courant inverse créera des fuites de flux d'un aimant du côté de l'arbre à relativement grande réluctance et saturable, pour éviter une sur-excitation.

Pour éviter un sur-poids de l'arbre, qui doit être par construction d'un certain diamètre, l'invention prévoit que cet arbre est creux.

De plus, étant donné que cet arbre traverse les espaces où se trouvent les deux fois six têtes de bobinage, l'invention prévoit aussi de faire des ouvertures latérales dans l'arbre au droit de chaque tête de bobinage, de disposer des pales au sortir de ces ouvertures latérales pour chasser radialement l'air sous l'influence de la rotation de l'arbre et de ménager une entrée d'air à au moins une des extrémités de l'arbre.

De la sorte, les conducteurs des têtes de bobinage sont mieux refroidis que dans une composition vectorielle triphasée qui ne comporte que deux têtes massives de bobinage, elles-mêmes avec des conducteurs intérieurs inaccessibles au flux d'air.

Aux dessins annexés, donnés à titre d'exemple relatif à une machine dynamo-électrique pouvant être à réluctance variable et devant pouvoir fonctionner à vitesse variable avec une grande puissance massique, aussi bien en générateur qu'occasionnellement en moteur:
- la figure 1 représente une coupe axiale partielle de la machine;
- la figure 2 représente une coupe passant par son axe;
- la figure 3 représente le vis-à-vis de deux têtes de bobinages statoriques de phases voisines décalées d'un tiers de pas polaire, et

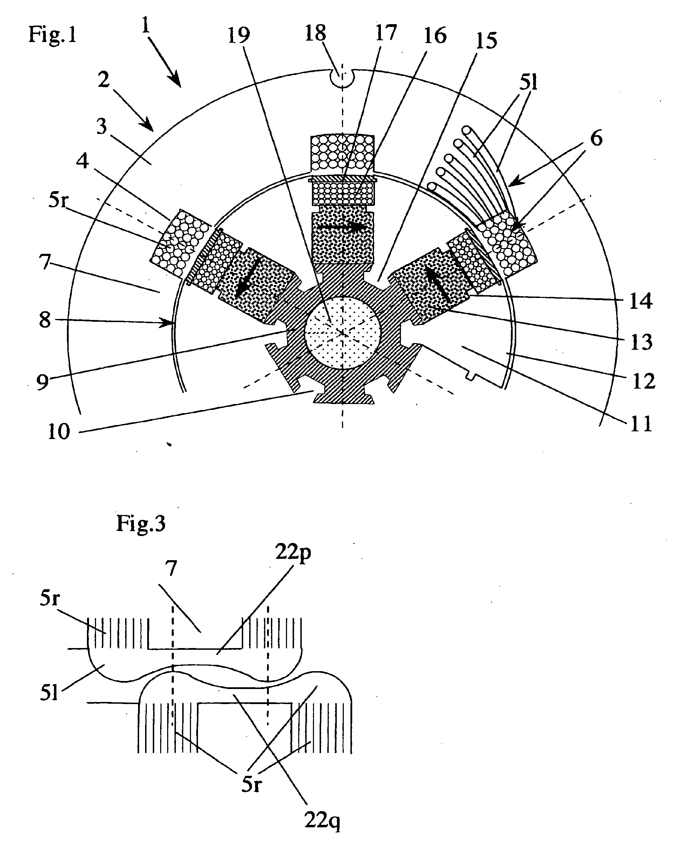

Sur la figure 1, la machine dynamo-électrique **1** comprend un stator **2** fait de tôles planes empilées **3** avec des encoches **4** dans lesquelles sont logés des conducteurs rectilignes **5** r d'un bobinage statorique **6** de préférence à pôles conséquents avec des conducteurs latéraux **51.**

Il y a ici 6 pôle statoriques dont l'un est représenté en **7.**

Le rotor **8** est constitué autour d'un arbre **9** dont la face extérieure comporte des rainures partiellement refermées **10.**

Des pôles rotoriques **11** sont constitués par un empilage de tôles, de forme globalement triangulaire.

Une face de cet empilage constitue une surface polaire **12** et un aimant permanent **13** est introduit entre une face latérale de ce pôle et la face d'un pôle **11** voisin, de manière à provoquer une concentration de flux dans les entrefers.

L'axe magnétique de l'aimant permanent **13** est perpendiculaire à ces faces et de sens opposés entre aimants permanents voisins.

La position radiale de l'aimant permanent est fixée par des butées latérales **14** des pôles **11.**

De plus, l'extrémité intérieure du triangle comporte une queue-d'aronde **15** qui s'encastre dans la rainure **10.**

La hauteur radiale d'un aimant permanent **13** laisse, jusqu'à l'entrefer, un espace pour loger des conducteurs rectilignes d'un bobinage rotorique **16** à méandres réalisé, de préférence comme pour le stator **2,** suivant le FR 2912010.

Une cale **17,** engagée près de l'entrefer, maintient le bobinage **14** à l'intérieur de l'entrefer.

Une encoche semi-circulaire **18** permettra d'assembler des circuits magnétiques statoriques.

D'autre part, on voit que l'assemblage de la structure rotorique **8** exige d'avoir un arbre **9** d'un certain diamètre et pour diminuer la masse de la machine, cet arbre peut être avantageusement creux avec un canal **19.**

L'invention propose alors d'utiliser cet arbre creux **9** pour effectuer un refroidissement des têtes de bobinage formées par les conducteurs latéraux statoriques **51.**

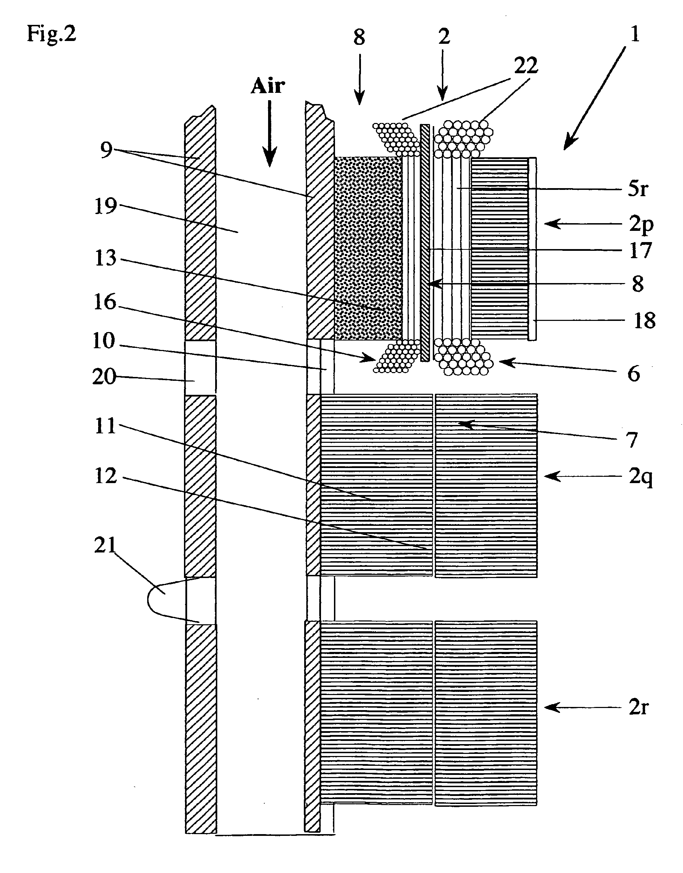

Sur la figure 2, on voit que trois rotors **8** sont glissés sur l'arbre **9,** avec ici un même calage angulaire.

Par ailleurs, on réalise trois stators monophasés **2p, 2q** et **2r** identiques et on assemble ces stators au moyen des encoches semi-circulaires 18 dont le calage angulaire est tel qu'après assemblage par des tirants (non représentés), on ait un écart angulaire progressant d'un tiers de pas polaire entre stators voisins.

L'introduction sur les tirants de cales permet de respecter la distance nécessaire au logement des têtes de bobinage **22**.

Des ouvertures latérales **20** sont effectuées au droit des têtes de bobinage et dans chaque ouverture, au moment de l'assemblage, on introduit une pale **21** destinée à souffler de l'air radialement sur les têtes de bobinage **22.**

Sur la figure 3, on a représenté deux têtes de bobinage statorique 2 **2p** et **2 2q** de deux phases. On voit que la sortie des conducteurs rectilignes **5r** hors d'une encoche se fait avec un certain diamètre, un peu inférieur à la largeur de l'encoche du fait de l'épanouissement des conducteurs à l'opposé de l'entrefer.

D'autre part, l'épaisseur axiale des conducteurs latéraux **51** diminue au début du trajet, pour augmenter à nouveau vers le pôle suivant. Cette diminution provient du fait que les conducteurs latéraux sont épanouis à l'opposé de l'entrefer comme cela a été représenté sur la figure 1 pour une première couche radiale statorique.

On voit que des têtes de bobinage se faisant vis-à-vis peuvent s'imbriquer, d'où une augmentation du pourcentage de fer pour une longueur axiale donnée.

Sans sortir du domaine de l'invention, les structures décrites peuvent être combinées de manières différentes.

Par exemple, le bobinage rotorique **16** peut avoir des conducteurs rectilignes **5r** sur toute la longueur de la machine, en diminuant la longueur des conducteurs.

Si les stators **2** sont monophasés à réluctance variable, ils peuvent avoir un calage angulaire permettant d'avoir une tête de bobinage **22** imbriquée dans l'espace entre deux têtes de bobinage du circuit voisin, le décalage entre phases étant reporté au rotor, par exemple en faisant faire des zigzag aux conducteurs rectilignes du bobinage **16..**

Avec un stator à composition vectorielle telle que triphasée, le rotor pourra ne comporter qu'un seul circuit magnétique rotorique avec un seul bobinage rotorique **16.**

## Revendications

1. Machine dynamo-électrique (**1**) à rotor (**8**) intérieur au stator (**2**)**,** ayant une double excitation des pôles rotoriques (**11**) par bobinage rotorique (16) et par aimant permanent **(13)** disposés d'une manière à provoquer une concentration de flux dans les entrefers, **caractérisée en ce que** le bobinage rotorique **(16)** est du type à pôles conséquents avec des conducteurs rectilignes **(5r)** situés au raz des entrefers, entre les pôles rotoriques **(11)** et **en ce qu'**un aimant permanent (13) est logé entre deux pôles rotoriques **(11)** voisins, sous les conducteurs rectilignes **(5r)** du bobinage rotorique **(16).**

2. Machine dynamo-électrique selon la revendication 1, **caractérisée en ce que** la découpe des tôles des pôles rotoriques **(11)** fait apparaître des butées latérales **(14)** immobilisant radialement un aimant permanent **(13) .**

3. Machine dynamo-électrique selon la revendication 1 ou 2, **caractérisée en ce qu'**une cale (17) engagée dans des échancrures des pôles **(11)** immobilise les conducteurs rectilignes **(5r)** du bobinage rotorique **(16).**

4. Machine dynamo-électrique selon l'une quelconque des revendications précédentes, **caractérisée en ce que** les conducteurs latéraux **(51)** d'une couche radiale d'un bobinage **(6), (16)** sont épanouis radialement à l'opposé de l'entrefer de façon à pouvoir insérer dans un épanouissement un conducteur de la couche radiale suivante.

5. Machine dynamo-électrique selon l'une quelconque des revendications précédentes, **caractérisée en ce que** les pôles rotoriques **(11)** sont rapportés individuellement sur un arbre **(9)** et **en ce qu'**un pôle rotorique **(11)** comporte à son extrémité centrale une queue-d'aronde (15) qui est encastrée dans une rainure refermée **(10)** de l'arbre **(9).**

6. Machine dynamo-électrique selon la revendication 5, **caractérisée en ce que** l'arbre **(9)** comporte un canal **(19), en ce que** des ouvertures latérales **(20)** sont faites au droit de chaque tête de bobinage **(22), en ce que** des pales de soufflage **(21)** au sortir de ces ouvertures sont disposées pour chasser radialement l'air sous l'influence de la rotation de l'arbre **(9)** et **en ce qu'**il est ménagé une entrée d'air à au moins une des extrémités de l'arbre **(9).**

7. Machine dynamo-électrique selon l'une quelconque des revendications précédentes, **caractérisée** un ce que le stator **(2)** est du type à réluctance variable, à phases axialement réparties et à bobinages à pôles conséquents.

## Claims

1. Dynamo-electric machine **(1)** with rotor **(8)** interior to the stator **(2),** having a twin excitation of the rotoric poles **(11)** by rotoric coiling **(16)** and by permanent magnet **(13)** arranged so as to induce a flux concentration in the airgaps, **characterised in that** the rotoric coiling **(16)** is of the consequent poles type with rectilinear conductors **(5r)** located flush alongside the airgaps between the rotoric poles **(11)** and **in that** a permanent magnet (13) is fitted between two neighbouring rotoric poles (11), beneath the rectilinear conductors **(5r)** of the rotoric coiling **(16).**

2. Dynamo-electric machine according to claim 1, **characterised in that** the cutting of the rotoric pole **(11)** sheets let come into sight lateral abutments **(14)** fixing radially in position a permanent magnet **(13).**

3. Dynamo-electric machine according to claim 1 or 2, **characterised in that** a wedge (17), introduced in notches of the poles **(11),** is fixing in position the rectilinear conductors (5r) of the rotoric coiling **(16).**

4. Dynamo-electric machine according to any one of the preceding claims, **characterised in that** the lateral conductors **(51)** of a radial layer of a coil **(6), (16)** are radialy flared out at the side remote from the airgap, so as to be able to set in such a flaring out a lateral conductor of the next radial layer.

5. Dynamo-electric machine according to any one of the preceding claims, **characterised in that** the rotoric poles **(11)** are individually mounted on a shaft **(9)** and **in that** a rotoric pole (11) comprises at his central extremity a dovetail **(15),** whith is imbedded in a partially closed slot **(10) of** the shaft **(9).**

6. Dynamo-electric machine according to claim 5, **characterised in that** the shaft **(9)** comprises a channel **(19), in that** lateral openings **(20)** are made in front of each head of coiling head (2 2), **in that** blowing blades **(21)** at the outled of these openings are disposed for blowing air in a radial direction, under the influence of the rotation of the shaft **(9),** and **in that** there is provided one air inlet at least at one of the extremities of the shaft **(9).**

7. Dynamo-electric machine according to any one of the preceding claims, **characterised in that** the stator **(2)** is of the variable reluctance type, with an axial distribution of phases and with consequent poles windings.

## Patentansprüche

1. Dynamo-elektrische Maschine **(1)** mit einem Rotor **(8)** im Inneren des Stators **(2),** mit einer doppelten Ansteuerung der Rotorpolen **(11)** durch Rotorwicklung **(16)** und Permanentmagnet **(13),** die so angeordnet sind, dass eine Flusskonzentration in den Luftspalten bewirkt wird, **dadurch gekennzeichnet, dass** die Rotorwicklung **(16)** ist vom Folgepolen aufweisenden Typ, mit geradlinigen Leitern **(5r)** die sich zwichen den beiden Rotorpolen **(11)** und in Höhe von den Luftspalten befinden, und dass ein Permanentrmagnet **(13)** unter den geradlinigen Leitern **(5r)** der Rotorwicklung **(16)** und zwischen zwei angrenzenden Rotorpolen **(11)** liegt.

2. Dynamo-elektrische Maschine nach Anspruch 1, **dadurch gekennzeichnet, dass** das Ausstanzen der Bleche der Rotorpolen **(11)** seitliche Anschläge **(14)** zum raial Blokieren eines Permanentmagnets **(13)** erscheinen lässt.

3. Dynamo-elektrische Maschine nach Anspruch 1 oder 2, **dadurch gekennzeichnet, dass** ein in Einschnitte der Polen **(11)** eingegriffener Keil **(17)** die geradlinige Leiter **(5r)** der Rotorwicklung **(16)** blockiert.

4. Dynamo-elektrische Maschine nach einem der vorherstehenden Ansprüche, **dadurch gekennzeichnet, dass** die seitliche Leiter **(51)** einer radialen Schicht einer Wicklung **(6), (16)** sich in vom Luftspalt abweisender radialer Richtung derart erweitern, dass ein leiter der folgenden Schicht eine Erweiterung eingefügt werden kann.

5. Dynamo-elektrische Maschine nach einem der vorherstehenden Ansprüche, **dadurch gekennzeichnet, dass** die Rotorpolen **(11)** einzeln an eine Welle **(9)** aufgebracht sind und, dass ein Rotorpol **(11)** an seinem zentralen Ende eine Schwalbenschwanz **(15)** aufweist, der in eine hinterschittene Nut **(10)** der Welle **(9)** eingefügt ist.

6. Dynamo-elektrische Maschine nach Anspruch 5, **dadurch gekennzeichnet, dass** die Welle **(9)** einen Kanal **(19)** aufweist, dass seitliche Öffnungen **(20)** gegenüber jedem Wicklungskopf **(22)** angeordnet sind, dass Blasblätter **(21)** am Ausgang dieser Öffnungen angeordnet sind, um die Luft unter dem Einfluss der Drehung der Welle **(9)** radial hinauszuwerfen, und dass ein Lufteintritt an mindestens einem der Ende der Welle **(9)** vorgesehen ist.

7. Dynamo-elektrische Maschine nach einem der vorherstehenden Ansprüche, **dadurch gekennzeichnet, dass** der Stator **(2)** ist von Tip mit veränlicher Reluctanz, axial verteilten Phasen, und Wicklungen mit Folgepolen.
